# EUROPEAN PATENT SPECIFICATION

(11) **EP 2 249 079 B1**
(45) Date of publication and mention of the grant of the patent: **01.07.2015**
(21) Application number: 10161136.6
(22) Date of filing: 27.04.2010
(51) Int. Cl.: F22D 1/36, F24H 9/20, F24D 12/02, F24H 9/00

(54) **Method and apparatus for improving the efficiency of a heat generator for industrial or domestic use**
Verfahren und Gerät zur Effizienzerhöhung einer Heizungsanlage zur industriellen Verwendung oder Hausgebrauch
Méthode et appareil pour améliorer l'efficience d'un générateur de chaleur pour une utilisation industrielle et domestique

(30) Priority: 27.04.2009 IT MI20090709
(43) Date of publication of application: 10.11.2010
(73) Proprietor: Interesco S.r.l., 12055 Diano d'Alba (IT)
(72) Inventor: Ferrero, Paolo, 10132 Torino (IT)
(74) Representative: Borsano, Corrado

(56) References cited:
- DE-A1- 2 246 486
- FR-A- 1 051 197
- FR-A- 1 095 257
- FR-A1- 2 515 312

## Description

### FIELD OF THE INVENTION

The present invention relates to a method and relative apparatus for improving the efficiency of a heat generator for industrial and domestic use. In particular, the method and the apparatus according to the invention can advantageously be applied to steam generators, hot or superheated water generators, diathermic oil generators or the like. The method and the apparatus according to the invention allow a substantial reduction in consumptions, with consequent reduction in the quantity of pollutants emitted into the atmosphere through flue gases, as well as a substantial lowering of the temperature of the same gases. Moreover, in the majority of industrial applications, the method and the apparatus according to the invention allow recovery of part of the latent evaporation heat contained in the gases, through their condensation, thus also reducing the concentration of nitrogen oxides present in the same gases.

### STATE OF THE ART

In the field of heating plants for industrial use there are known various methods and relative apparatus to increase the combustion efficiency of a heat generator. Examples of known solutions are disclosed in the patent applications FR 2515312 and in DE2246486. Document FR2 515 312 discloses the preamble of claims 1 and 6. These methods are essentially based on heat recovery from flue gases to preheat the combustion air or the feed fluid destined to be heated through the same heat generator. For example, in the case of water-fed heat generators, to produce hot water or steam, flue gas/water heat exchangers to preheat the feed water, commonly also known as economizers, and flue gas/air heat exchangers to preheat the combustion air, are provided.

The majority of known solutions are provided with only one of these heat exchangers and, more precisely, only with the economizer. More rarely and only for particular conditions of use, apparatus with double heat exchanger are used. For example, in the case of heating plants with low condensate recovery, and therefore high percentages of make-up water at low temperatures, a two-stage apparatus is provided, in which the flue gases first yield heat to the feed water and then to the make-up water to preheat it. However, in the case of plants with high recovery of high temperature condensate (i.e. 80-90 °C) a double heat exchanger, composed of an economizer and of a water/air heat exchanger for preheating of the combustion air at the expense of the return condensate, is used.

However, the methods and apparatus conventionally used to improve the efficiency of heat generators for industrial use have some problems, the first of which is identified in the high dependency on the conditions of use of the heat generator which can vary greatly, especially in an industrial environment. Conventional apparatus only allow improvement of the efficiency of the heat generator when its working conditions reach given operating conditions. In fact, conventional apparatus are commonly "conservatively" sized, so that, in any operating conditions, the temperature of the fluids involved in the heat exchange processes described above remain within given limits. This conservative sizing sacrifices the efficiency of heat recovery which, when the service conditions vary, is on average lower than optimal recovery. Therefore, it is deduced that conventional methods and apparatus cannot be considered "standard" in the sense that they cannot be applied to any heat generator, but rather to a specific generator installed in a specific plant.

For this purpose, for example, in current solutions it is observed that the feed water of steam generators, typically coming from a degasser, is usually at a temperature between 100-110 °C. These temperatures establish a theoretical lower limit for the final temperature of the flue gases at the outlet of an economizer. However, in actual fact, this temperature of the flue gases is significantly higher, around at least 120-140°C. This occurs because economizers substantially work at a "fixed point" established on the basis of the combination of the flue gas flow rate and the nominal water flow rate. Therefore, economizers are conservatively sized, sacrificing their efficiency, in order to avoid the risk of overheating, boiling and damages during transients characterized by low water flow rate and high flue gas flow rate.

A further problem of conventional apparatus lies in the method of preheating the combustion air which is also currently performed using the energy from flue gases. In fact, if on the one hand an increase in combustion efficiency is observed, on the other this leads to an increase in the concentration of nitrogen oxides. To avoid exceeding the concentration limits of nitrogen oxides in emissions, variable from place to place, the air preheaters must be custom designed and conservatively sized. This results in a sacrifice to the recovery efficiency which, upon variation of the operating conditions, is on average below the optimum level.

On the basis of these considerations, it is clear that there is the need to provide alternative solutions, i.e. a method to improve the efficiency of a heat generator which allows the drawbacks indicated above to be overcome.

The principal aim of the present invention is therefore to provide a method and an apparatus to improve the efficiency of a heat generator which allows the drawbacks and problems indicated above to be overcome.

Within this scope, a first object of the present invention is to provide a "standard" method and apparatus, i.e. capable of optimally increasing the efficiency of a heat generator, regardless of its operating conditions and regardless of the type of plant in which it is installed, simultaneously ensuring that the final concentration of pollutants in the flue gases, in particular nitrogen oxides, always remains below predetermined limits.

A further object of the present invention is to provide a method and an apparatus which are reliable and easy to produce at competitive costs.

### SUMMARY

The method according to the invention is therefore applied to combustion heat generators for industrial and domestic use used to heat a flow rate of heat-carrying fluid, such as water or oil. The method provides for the performance of a first heat exchange, through first heat exchanger means, between at least a first fraction (or the total flow rate) of said fluid and the combustion air to be delivered to the heat generator so as to cool said fluid and heat said combustion air. The method according to the invention also provides for the performance of a second heat exchange, through second heat exchanger means, between this fraction (or the total flow rate) of fluid (cooled by said first heat exchanger means) and the flue gases produced by the heat generator so as to heat the fluid to be delivered to the heat generator and so as to cool said flue gases.

Cooling of the feed fluid, through the first heat exchanger means, allows optimization of subsequent heat exchange between this fluid and the flue gases as it allows a larger quantity of thermal energy to be removed from the latter. It has been seen that in situations in which the temperature of the fluid exiting from the first heat exchanger means is lower than the dew point temperature of the flue gases entering the second heat exchanger means, then it is possible to make the flue gases condensate, thus recovering part of the latent heat contained therein to the advantage of greater heat transfer to the feed fluid entering the heat generator. This also translates into a partial reduction of polluting elements, such as nitrogen oxides.

The method provides for regulation of the flow rate of flue gases, entering said second heat exchanger means, as a function of the temperature of the fluid exiting from the same second heat exchanger means. More precisely, the method provides for modulation of the flow rate of flue gases entering said second heat exchanger means so as to maintain the temperature of the feed fluid exiting from the same second heat exchanger means in proximity of a predetermined value. This solution allows optimization of heat exchange inside the second heat exchanger means in any operating condition of the heat generator.
According to a possible embodiment, the method according to the invention also provides for regulation of the amount of the first fraction (or of the total flow rate) of the feed fluid (entering said first heat exchanger means) as a function of the temperature of the feed fluid and/or as a function of the temperature of the combustion air exiting from said first heat exchanger means. More precisely, the method provides for variation of the first flow rate of the feed fluid, so as to regulate the output temperature of the same fluid, or for reduction of the flow rate of the feed fluid if the value of the output temperature of the combustion air exceeds a predetermined threshold value. This solution advantageously allows the efficiency of the second heat exchanger means to be maximized, downstream of the first heat exchanger means, and the emission level of nitrogen oxide to be kept under control.

As indicated above, the present invention also relates to an apparatus to improve the efficiency of a combustion heat generator that allows implementation of the method described above. The apparatus comprises first heat exchanger means provided to perform heat exchange between at least a first fraction (or the total flow rate) of feed fluid and a flow rate of combustion air to be delivered to the heat generator. The apparatus also comprises second heat exchanger means provided to perform heat exchange between the fluid exiting from the first heat exchanger means and a flow of flue gases produced by the heat generator. The apparatus according to the invention also comprises regulation means of the flow rate provided to vary the value of the flow rate of the flue gases that pass through the second heat exchanger means. In detail, these regulation means allow the flow rate of the flue gases to be varied as a function of the temperature of the feed fluid exiting from the second heat exchanger means.

The apparatus according to the invention comprises regulation means of the flow rate provided to vary the value of the first flow rate of fluid that passes through the two heat exchanger means. More precisely, these regulation means allow the value of the first fraction of fluid to be varied as a function of the feed fluid temperature or of the combustion air temperature exiting from the first heat exchanger means.

The apparatus according to the invention preferably comprises first temperature sensor means to detect the temperature of the feed fluid exiting from the first heat exchanger means, second temperature sensor means to detect the temperature of the combustion air exiting from the first heat exchanger means and third sensor means to detect the temperature of the feed fluid exiting from the second heat exchanger means. The apparatus preferably also comprises a control unit which receives a first input signal sent by the first sensor means and characteristic of the combustion temperature of the feed fluid exiting from the first heat exchanger means and a second signal sent by the second sensor means and characteristic of the temperature of the combustion air exiting from the first heat exchanger means. The control unit also receives a third input signal sent by the third temperature sensor means and characteristic of the temperature of the feed fluid exiting from the second heat exchanger means. The control unit is operatively connected to regulation means of the flow rate of fluid to control a variation of the flow rate of fluid that passes through the first heat exchanger means as a function of the first and of the second signal sent by the first and by the second sensor means. The control unit is also operatively connected to regulation means of the flow rate of the flue gases to control a variation in the flow rate of the flue gases as a function of the signal sent by the third sensor means.

### LIST OF FIGURES

Further characteristics and advantages of the present invention will be more apparent from the description of preferred but non-exclusive embodiments of the method and of the apparatus according to the invention, illustrated by way of non-limiting example with the aid of the accompanying drawings, wherein:
- Figs. 1 and 2 represent a first possible embodiment of an apparatus according to the present invention.
- Fig. 3 schematically represents a second embodiment of an apparatus according to the present invention;
- Fig. 4 schematically represents a plant for steam generation comprising an apparatus according to the present invention;

### Detailed Description of the Invention

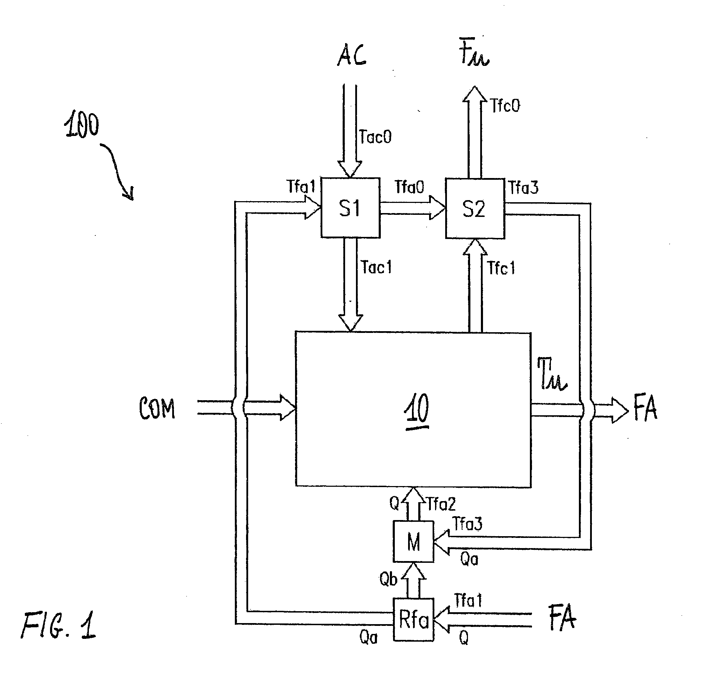

Fig.1 schematically represents a first embodiment of an apparatus 100 through which the method according to the present invention is applied. Method and apparatus can be applied to a combustion heat generator 10 in order to improve its efficiency. For the objects of the present invention, the expression "heat generator" is intended to generically indicate a device capable of heating, up to and beyond evaporation temperature, a feed liquid (i.e. water) through a combustion process. Therefore, the same expression is used to indicate a saturated or superheated steam generator, but also a hot water or superheated water generator, a diathermic oil generator and also other types of heat generators that can be used in an industrial or domestic environment.

The apparatus according to the invention comprises a hydraulic circuit, through which a fluid FA passes, to be heated by the generator 10 up to a using temperature Tu. More precisely, the feed circuit is fed by a flow rate Q of feed fluid. In an industrial environment, in the case of a plant for steam generation, the flow rate of feed water Q can come from a degasser into which part of the steam generated by the plant, water from condensate and make-up water flow.

The feed circuit of the apparatus 100 preferably comprises regulation means Rfa of the flow rate Q at which the flow rate Q of the feed fluid is divided into a first fraction Qa and into a second fraction Qb. The regulation means Rfa allow the amount of the two fractions Qa and Qb of flow rate Q to be varied according to purposes described below. For this reason, these regulation means Rfa can, for example, comprise, a three-way solenoid valve with an inlet into which the flow rate Q flows and two outlets from which the two fractions Qa and Qb exit. Naturally, it is understood that the solenoid valve could also be substituted by another functionally equivalent means.

The first fraction Qa of flow rate Q exiting from the regulation means Rfa flows into the first heat exchanger means S1 whose function is to preheat the combustion air AC to be delivered to the heat generator 10 in order to allow the combustion process together with a flow of fuel COM also entering the generator 10. More precisely, the first heat exchanger means S1 are provided to transfer part of the thermal energy of the first fraction Qa of fluid FA to the combustion air.

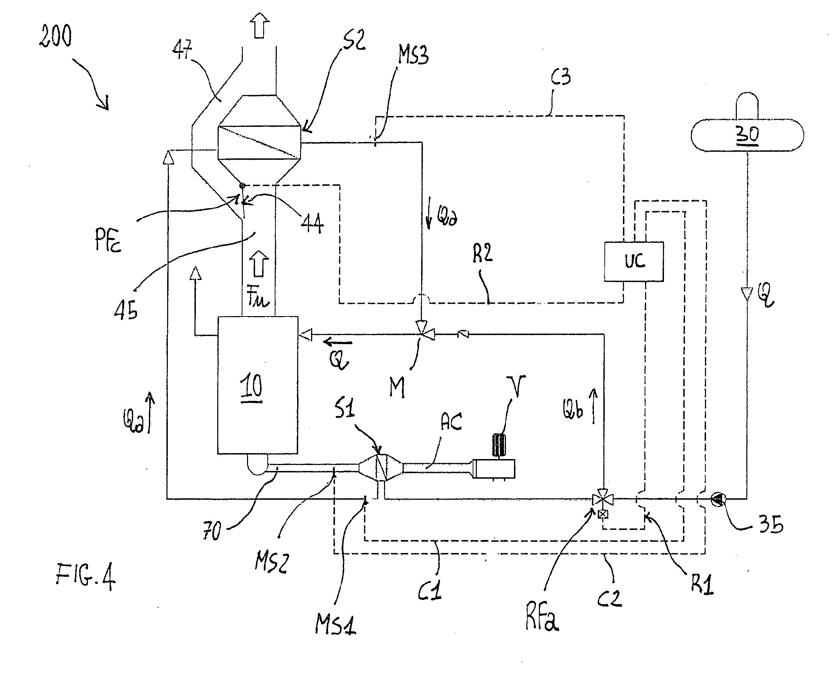

The first fraction Qa of flow rate Q of fluid FA flows into the first heat exchanger means S1 at a first temperature Tfa1 which is substantially characteristic of the thermal level of the fluid FA coming from the feed source. In the case of steam generators for industrial use, for example, the temperature Tfa1 can be reasonably considered in a range between 100 and 110 degrees Celsius. Through the first heat exchanger means S1 the first fraction Qa of flow rate Q is cooled to a temperature Tfa0 below Tfa1. Simultaneously, the combustion air AC enters the first heat exchanger means S1 at an input temperature Tac0 and exits at a temperature Tac1 greater than the input temperature. The combustion air heated through the first heat exchanger means S1 is sent to the heat generator 10 through a supply duct (indicated with the reference 70 in Fig. 4) to allow the combustion process that normally takes place in a combustion chamber, also known as firebox.

The apparatus 100 according to the invention comprises second heat exchanger means S2 which have the function of heating the first fraction Qa of flow rate Q, exiting from the first heat exchanger means S1, through heat exchange with the flue gases Fu produced by the combustion process inside the generator 10. In other words, through the second heat exchanger means S2, the first fraction Qa of fluid FA is heated passing from the second temperature Tfa0 to a third temperature Tfa3 which when operating at steady state is substantially higher than the first input temperature Tfa1 to the first heat exchanger means S1. Simultaneously, the flow rate of the flue gases Fu that passes through the second heat exchanger means S2 is cooled, passing from an initial temperature Tfc1 to an output temperature Tfc0.

It is observed that on the basis of the heat exchange in the first heat exchanger means S1 it is possible to obtain a first fraction Qa of fluid FA at a second temperature Tfa0 lower than the first temperature Tfa1 without this influencing the efficiency of the generator as the heat yielded by the first fraction Qa is transferred to the combustion air. In this way, the first fraction Qa of flow rate Q entering the second heat exchanger means S2 allows cooling of the flue gases to below the initial temperature of the feed fluid Tfa1. More precisely, the flue gases are cooled to a temperature for venting into the atmosphere Tfc0 which is, in fact, lower than the input temperature Tfa1 of the fluid FA into the first heat exchanger means S1.

The first fraction Qa of flow rate Q at temperature Tfa3 exiting from the second heat exchanger means S2 is mixed, at a mixing unit M, with the second fraction Qb of flow rate Q at temperature Tfa1 coming from the regulation means Rfa of the flow rate of fluid FA. In this way, the feed fluid FA enters the generator 10 at a temperature Tfa2 between Tfa1 and Tfa3 to be heated to the using temperature Tu by the same generator. The mixing unit M therefore has the function of allowing mixing of the two fractions Qa and Qb aimed at restoring the feed flow rate Q to be delivered to the inlet of the heat generator 10.

From a thermodynamic point of view, it is observed that the net energy recovery obtained through the apparatus 100 corresponds to the heat yielded by the flue gases in the second heat exchanger means S2 or corresponds also to the heat yielded by the first fraction Qa of fluid FA to the combustion air AC plus the heat associated with the thermal gradient given by the difference between the temperatures Tfa2 and Tfa1 referred to the feed flow rate Q.

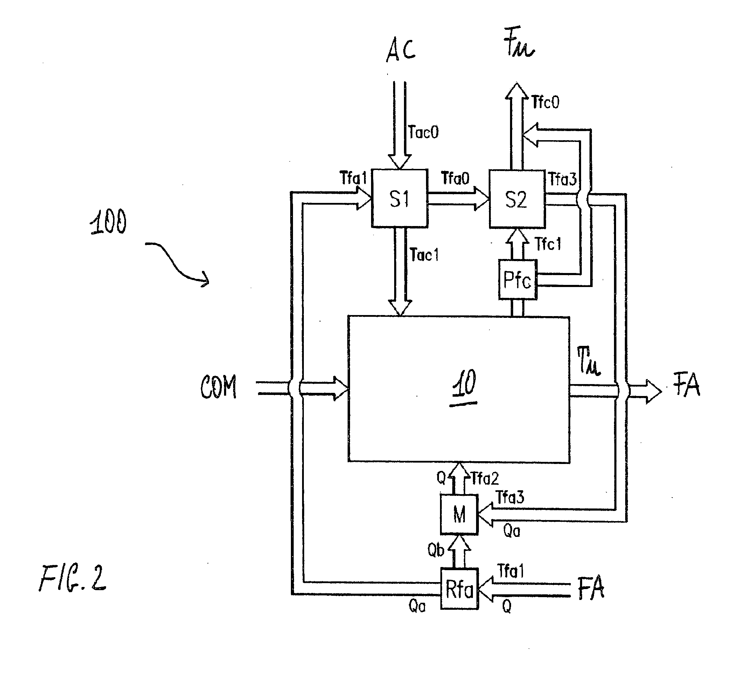

With reference to Fig. 2, the apparatus 100 according to the present invention comprises regulation means Pfc of the flow rate to vary the flow rate of flue gases Fu entering the second heat exchanger means S2. These regulation means Pfc have the function of varying the flow rate of the flue gases involved in heat exchange with the fluid FA as a function of the temperature Tfa3 of the latter exiting from the second heat exchanger means S2. More precisely, when this temperature Tfa3 exceeds a predetermined threshold value then the flow rate of the input flue gases Fu is reduced so as to ensure in any case the maximum efficiency for the second heat exchanger means S2, regardless of the operating conditions of the heat generator 10.

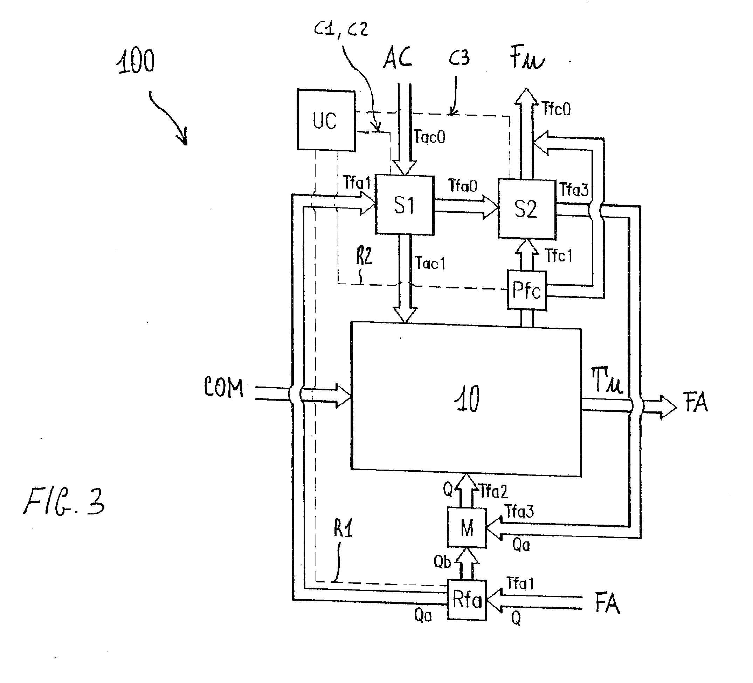

Fig. 3 schematically represents a third embodiment of an apparatus according to the present invention which comprises first temperature sensor means MS1, second temperature sensor means MS2 and third temperature sensor means MS3, to detect, respectively, the temperature level Tfa0 of the feed fluid exiting from the first heat exchanger means S1, the temperature level Tac1 of the combustion air AC exiting from the first heat exchanger means S1 and the temperature Tfa3 of the feed fluid FA exiting from the second heat exchanger means S2.

The first sensor means MS1 and the second sensor means MS2 are electrically connected to a control unit UC so as to send it a first control signal C1 characteristic of the temperature level Taf0 of the feed fluid exiting from the first heat exchanger means S1 and a second control signal C2 characteristic of the temperature level Tac1 of the combustion air exiting from the first heat exchanger means S1. Analogously, third sensor means MS3 are electrically connected to the same control unit UC so as to send a third control signal C3 characteristic of the temperature level Tfa3 of the feed fluid FA exiting from the second heat exchanger means S2.

The control unit UC is operatively connected to the regulation means Rfa of the flow rate Q of fluid FA (hereinafter also indicated with the expression first regulation means Rfa) and to the regulation means Pfc of the flow rate of flue gases Fu (hereinafter also indicated with the expression second regulation means Pfc) to control its operation. In detail, the control unit UC sends a first control signal R1 to the first regulation means Rfa so as to vary the amount of the first fraction Qa of the flow rate Q passing through the first heat exchanger means S1 as a function of the first signal C1 sent by the first sensor means MS1 and of the second signal C2 sent by the second sensor means MS2. The control unit UC sends a second control signal R2 to the second regulation means Pfc to vary the amount of the flow rate of flue gases Fu entering the second heat exchanger means S2.

The use of the control unit UC allow constant and continuous monitoring of the operating conditions of the two heat exchanger units S1 and S2. The control signals R1, R2 sent to the first regulation means Rfa and to the second regulation means Pfc, as a function of the control signals C1, C2 and C3 (feed-back) sent by the relative sensor means MS1,MS2, MS3 allow continuous variation of the operating conditions of the two heat exchanger means S1 and S2 so that they can always work optimally in relation to the predetermined objects.

Fig. 4 is a second schematic view illustrating an example relative to the embodiment of the apparatus of Fig. 3. More precisely, Fig. 4 relates to an industrial plant 200 for steam generation which comprises a steam generator 10 and an apparatus according to the present invention. In the case illustrated, the total flow rate Q of feed fluid F comes from a degasser 30 through a hydraulic pump 35 to the regulation means Rfa. These latter are composed of a solenoid valve whose operation is governed by the control unit UC to which the solenoid valve is operatively connected.

The first fraction Qa of the flow rate Q exiting from the solenoid valve is conveyed to the inlet of the first heat exchanger means S1, while the second fraction Qb is conveyed to a mixer M. A flow of combustion air AC is conveyed to the first heat exchanger means S1 through a fan V which draws in air at ambient temperature. The combustion air AC exiting from the first heat exchanger means S1 is sent directly to the combustion chamber of the steam generator 10, while the cooled water exiting from the first heat exchanger means S1 is sent to the inlet of the second heat exchanger means S2. This latter is positioned substantially in a flue gas vent duct 45 of the steam generator 10 so as to be struck by the flue gases. The flow rate of flue gases Fu at the inlet of the second heat exchanger means S2 is regulated through regulation means Pfc which in the case in hand comprise a motorized damper 44 that divides the flow rate of flue gases Fu exiting from the steam generator into a first flow destined to pass through the second heat exchanger means S2 and into a second flow destined to pass through a by-pass duct separated from the second heat exchanger means S2. The motorized damper is electrically connected to the control unit UC which governs its operation.

The first fraction Qa of water exiting from the second heat exchanger means S2 is sent to the mixer M to be mixed with the second fraction Qb in order to restore the total flow rate Q to be delivered to the steam generator 10. It is observed that the use of the mixer M and the use of the regulation means Rfa of the flow rate of feed fluid FA (destined to pass through the heat exchanger means) must be considered as preferred, although not exclusive. In fact, in a possible embodiment of the method, of the apparatus and of the plant according to the present invention, the total flow rate Q of feed fluid FA could pass through the first S1 and the second heat exchanger means S2. In other words, the total flow rate Q could be used to perform the first heat exchange with the combustion air AC in the first heat exchanger means S1 and to perform the second heat exchange with the flow rate of flue gases Fu in the second heat exchanger means.

Some operative characteristics of the steam generator 10 are presented below and represent a possible steady state operation without and with an apparatus according to the present invention:
- temperature of water entering the generator: 102 °C
- total flow rate of water entering the generator: 16000 liters/hour
- temperature of combustion air entering the generator: 20 °C
- operating pressure of the steam generator: 24 bar
- saturated steam flow rate produced by the steam generator: 16 tons/hour
- combustion chamber output of the steam generator: 12000 kW
- fluid F output from the steam generator: 10560 kW
- final delivery temperature of flue gases: 240 °C

In these operating conditions, without any recovery apparatus, the steam generator reaches a useful efficiency of 88%. It has been seen that with the use of a conventional recovery system formed only by an economizer, in the same operating conditions, it is possible to reduce the temperature of flue gases from 240°C to 120°C, heating the feed water from 102°C to 140°C and obtaining a useful efficiency of 93.9%. With an apparatus according to the present invention it is however possible to increase the useful efficiency of the steam generator to 97.2% obtaining the following operating properties:
- temperature Tfa1 of the water delivered from the degasser: 102°C
- total flow rate Q delivered from the degasser: 16000 liters/hour
- temperature Tac0 of combustion air entering the first heat exchanger means S1: 20 °C
- operating pressure of the steam generator: 24 bar
- flow rate of saturated steam produced by the steam generator: 16 tons/hour
- combustion chamber output of the steam generator: 12000 kW
- fluid F output from the steam generator: 10560 kW
- temperature of combustion air entering the steam generator: 100 °C
- temperature of fluid F entering the steam generator: 137 °C
- final delivery temperature of flue gases: 60 °C

From comparing the operative characteristics of the generator with and without the apparatus according to the invention, it is evident that in addition to increased efficiency, a considerable reduction in thermal pollution is also advantageously achieved, due to the reduction of the temperature of flue gases and a reduction of the quantity of pollutants emitted into the atmosphere as a result of the lower fuel consumption. Moreover, as partial condensation of combustion flue gases, in the order of 60 1/h, can be obtained in the heat exchanger means S2, a decrease of the concentration of nitrogen oxides, with respect to the input value of the heat exchanger means S2, is also achieved.

The technical solutions adopted for the method and apparatus according to the present invention allow the proposed aims and the objects to be fully achieved. In particular, use of the first heat exchanger means allows preheating of the combustion air advantageously cooling at least a first fraction of the feed fluid. Use of the second heat exchanger means instead allows the temperature of the flue gases to be reduced through heating of the same first fraction of flow rate of fluid previously cooled through preheating of the combustion air. Regulation of the flow rate of flue gases as a function of the temperature of the feed fluid delivered from the second heat exchanger means in any case ensures maximum efficiency for the second heat exchanger means regardless of the operating conditions of the heat generator. Moreover, the possible use of regulation means of the flow rate of feed fluid allows active distribution of the flow rate of feed fluid to be preheated as a function of the output temperature of the fluid from the first heat exchanger means or of the output temperature of the combustion air from the first heat exchange means. This not only allows optimization of heat exchange efficiency in the second heat exchanger means but also limiting of the concentration of pollutants, in particular nitrogen oxides, by regulating the combustion air temperature. Further, regulation of the flow rate of flue gases in thermal exchange with the flow rate

The method and the apparatus thus conceived are susceptible to numerous modifications and variants, all falling within the scope of the inventive concept as defined in the appended claims; moreover all details can be replaced by other technically equivalent details.

In practice, the materials used and the contingent dimensions and forms can be any, according to requirements and to the state of the art.

## Claims

1. A method for improving the efficiency of a heat generator (10) destined to heat a flow rate (Q) of feed fluid (FA) through combustion, said method comprising the steps of:
- performing a first heat exchange between at least a first fraction (Qa) of said flow rate (Q) of said feed fluid (FA) and a flow rate of combustion air (AC) to be delivered to said generator (10) so as to heat said combustion air (AC) and so as to cool said first fraction (Qa) of feed fluid (FA) from a first temperature (Tfa1) to a second temperature (Tfa0);
- performing a second heat exchange between said first fraction (Qa) of feed fluid (FA) at said second temperature (Tfa0) and a flow rate of flue gases (Fu) produced by said heat generator (10) so as to cool said flue gases (Fu) and so as to heat said feed fluid (FA) from said second temperature (Tfa0) to a third temperature (Tfa3),
**characterized in that** said flow rate of flue gases (Fu) in heat exchange with said first fraction (Qa) of said feed fluid (FA) is regulated as a function of the value of said third temperature (Tfa3).

2. The method according to claim 1, wherein the amount of said first fraction (Qa) of said feed fluid (FA) is regulated as a function of the temperature (Tfa0) reached by said feed fluid (FA) following said first heat exchange.

3. The method according to claim 1, wherein the amount of said first fraction (Qa) of said feed fluid (FA) is regulated as a function of the temperature (Tca1) reached by said combustion air (AC) following said first heat exchange.

4. The method according to any one of claims 1 to 3, wherein said first fraction (Qa) of feed fluid (FA), following said second heat exchange, is mixed with a second fraction (Qb) of said feed fluid (FA) at said first temperature (TFa1).

5. The method according to any one of claims 1 to 3, wherein said first heat exchange and said second heat exchange are performed between the total flow rate (Q) of feed fluid (FA) and respectively said flow rate of combustion air (AC) and said flow rate of flue gases (Fu).

6. An apparatus (100) for improving the efficiency of a combustion heat generator (10), said apparatus comprising:
- first heat exchanger means (S1) provided to perform a first heat exchange between at least a first fraction (Qa) of a feed fluid (FA) to be delivered to said generator (10) and a flow rate of combustion air (AC) to be delivered to said generator (10);
- second heat exchanger means (S2) provided to perform a second heat exchange between the feed fluid (FA) exiting from said first heat exchanger means (S1) and a flow rate of combustion flue gases (Fu) produced by said heat generator (10),
said apparatus (100) being **characterized in that** it comprises regulation means (Pfc) of the flow rate to
regulate the flow rate of said flue gases (Fu) entering said second heat exchanger means (S2), said regulation means (PFc) being for regulating the flow rate of said flue gases (Fu) as a function of the temperature (TFa3) of said feed fluid (FA) exiting from said second heat exchange means (S2).

7. The apparatus (100) according to claim 6, wherein said apparatus (100) comprises further regulation means (Rfa) of the flow rate of fluid (FA) that passes through said heat exchanger means (S1, S2), said further regulation means (Rfa) regulating said first fraction (Qa) as a function of the temperature (Tfa0) of the feed fluid (FA) exiting from said first heat exchanger means (S1) and/or as a function of the temperature (Tac1) of said combustion air (AC) exiting from said first heat exchanger means (S1).

8. The apparatus (100) according to claim 7, wherein said apparatus (100) comprises
- first temperature sensor means (MS1) to detect the temperature (Tfa0) of said feed fluid (FA) exiting from said first heat exchanger means (S1);
- second temperature sensor means (MS2) to detect the temperature (Tac1) of said combustion air (AC) exiting from said first heat exchanger means (S1);
- third temperature sensor means (MS3) to detect the temperature of said feed fluid (FA) exiting from said second heat exchanger means (S2);
- a control unit (UC) connected to said first (MS1), second (MS2) and third sensor means (MS3) to receive respectively a first control signal (C1) characteristic of the temperature (Taf0) of the feed fluid (FA) exiting from said first heat exchanger means (S1), a second control signal (C2) characteristic of the temperature (Tac1) of the combustion air (AC) exiting from said first heat exchanger means (S1) and a third control signal (C3) characteristic of said temperature (TFa3) of said feed fluid (FA) exiting from said second heat exchanger means (S2), said control unit (UC) sending a first control signal (R1) to said further regulation means (Rfa) of the flow rate of fluid (FA), as a function of said first (C1) and second control signal (C2) and sending a second control signal (R2) to said regulation means (Pfc) of the flow rate of said flue gases (Fu) as a function of said third control signal (C3).

9. The apparatus (100) according to any one of claims 6 to 8, wherein said apparatus (100) comprises a mixer (M) to mix said first fraction (Qa) of flow rate (Q) of fluid (FA) exiting from said second heat exchanger means (S2) with a second fraction (Qb) of flow rate (Q) of fluid (FA) to restore the total flow rate (Q) entering said heat generator (10).

10. A plant (200) for heating a feed fluid (FA), **characterized in that** it comprises:
- a heat generator (10) to heat said feed fluid (FA) to a using temperature through combustion;
- an apparatus according to any one of claims 6 to 9, to improve the efficiency of said heat generator (10).

## Patentansprüche

1. Verfahren zum Verbessern der Effizienz eines Wärmegenerators (10), der dazu bestimmt ist, einen Durchfluss (Q) von Zufuhrfluid (FA) durch Verbrennung zu erhitzen, wobei das Verfahren die Schritte umfasst:
- Ausführen eines ersten Wärmeaustauschs zwischen zumindest einem ersten Bruchteil (Qa) des Durchflusses (Q) des Zufuhrfluides (FA) und eines Durchflusses von Verbrennungsluft (AC), die an den Generator (10) zu liefern ist, um so die Verbrennungsluft (AC) zu erwärmen und um so den ersten Bruchteil (Qa) des Zufuhrfluides (FA) von einer ersten Temperatur (Tfa1) zu einer zweiten Temperatur (Tfa0) zu kühlen;
- Ausführen eines zweiten Wärmeaustauschs zwischen dem ersten Bruchteil (Qa) von Zufuhrfluid (FA) bei der zweiten Temperatur (Tfa0) und einem Durchfluss von Abgasen (Fu), die von dem Wärmegenerator (10) erzeugt werden, um so die Abgase (Fu) zu kühlen und um so das Zufuhrfluid (FA) von der zweiten Temperatur (Tfa0) auf eine dritte Temperatur (Tfa3) zu erhitzen,
**dadurch gekennzeichnet, dass** der Durchfluss von Abgasen (Fu) in Wärmeaustausch mit dem ersten Bruchteil (Qa) des Zufuhrfluides (FA) als eine Funktion des Wertes der dritten Temperatur (Tfa3) reguliert wird.

2. Verfahren nach Anspruch 1, wobei der Betrag des ersten Bruchteils (Qa) des Zufuhrfluides (FA) als eine Funktion der Temperatur (TFa0) reguliert wird, die das Zufuhrfluid (FA) nach dem ersten Wärmeaustausch erreicht.

3. Verfahren nach Anspruch 1, wobei der Betrag des ersten Bruchteils (Qa) des Zufuhrfluides (FA) als eine Funktion der Temperatur (Tca1) reguliert wird, die von der Verbrennungsluft (AC) nach dem ersten Wärmeaustausch erreicht wird.

4. Verfahren nach einem der Ansprüche 1 bis 3, wobei der erste Bruchteil (Qa) von Zufuhrfluid (FA) nach dem zweiten Wärmeaustausch mit einem zweiten Bruchteil (Qb) des Zufuhrfluides (FA) bei der ersten Temperatur (TFa1) gemischt wird.

5. Verfahren nach einem der Ansprüche 1 bis 3, wobei der erste Wärmeaustausch und der zweite Wärmeaustausch zwischen dem Gesamtdurchfluss (Q) von Zufuhrfluid (FA) und jeweils dem Durchfluss von Verbrennungsluft (AC) und dem Durchfluss von Abgasen (Fu) ausgeführt wird.

6. Vorrichtung (100) zum Verbessern der Effizienz eines Verbrennungswärmegenerators (10), wobei die Vorrichtung umfasst:
- ein erstes Wärmetauschermittel (S1), das so vorgesehen ist, um einen ersten Wärmeaustausch zwischen einem ersten Bruchteil (Qa) eines Zufuhrfluides (FA), das an den Generator (10) zu liefern ist, und einem Durchfluss von Verbrennungsluft (AC), die an den Generator (10) zu liefern ist, auszuführen;
- ein zweites Wärmetauschermittel (S2), das derart vorgesehen ist, einen zweiten Wärmeaustausch zwischen dem Zufuhrfluid (FA), das von dem ersten Wärmetauschermittel (S1) austritt, und einem Durchfluss von Verbrennungsabgasen (Fu), die von dem Wärmegenerator (10) erzeugt werden, auszuführen,
wobei die Vorrichtung (100) **dadurch gekennzeichnet ist, dass** sie ein Regulierungsmittel (Pfc) des Durchflusses umfasst, um den Durchfluss der Abgase (Fu), die in das zweite Wärmetauschermittel (S2) eintreten, zu regulieren, wobei das Regulierungsmittel (PFc) zur Regulierung des Durchflusses der Abgase (Fu) als eine Funktion der Temperatur (TFa3) des Zufuhrfluides (FA), das von dem zweiten Wärmetauschermittel (S2) austritt, vorgesehen ist.

7. Vorrichtung (100) nach Anspruch 6, wobei die Vorrichtung (100) ferner ein Regulierungsmittel (Rfa) des Durchflusses von Fluid (FA) umfasst, das durch das Wärmetauschermittel (S1, S2) gelangt, wobei das weitere Regulierungsmittel (Rfa) den ersten Bruchteil (Qa) als eine Funktion der Temperatur (Tfa0) des Zufuhrfluides (FA), das das erste Wärmetauschermittel (S1) verlässt, und/oder als eine Funktion der Temperatur (Tac1) der Verbrennungsluft (AC), die das erste Wärmetauschermittel (S1) verlässt, reguliert.

8. Vorrichtung (100) nach Anspruch 7, wobei die Vorrichtung (100) umfasst:
- ein erstes Temperatursensormittel (MS1), um die Temperatur (Tfa0) des Zufuhrfluides (FA), das von dem ersten Wärmetauschermittel (S1) austritt, zu detektieren;
- ein zweites Temperatursensormittel (MS2), um die Temperatur (Tac1) der Verbrennungsluft (AC), die das erste Wärmetauschermittel (S1) verlässt, zu detektieren;
- ein drittes Temperatursensormittel (MS3), um die Temperatur des Zufuhrfluides (FA), das das zweite Wärmetauschermittel (S2) verlässt, zu detektieren;
- eine Steuereinheit (UC), die mit dem ersten (MS1), zweiten (MS2) und dritten Sensormittel (MS3) verbunden ist, um jeweils ein erstes Steuersignal (C1), das für die Temperatur (Taf0) des Zufuhrfluides (FA), das das erste Wärmetauschermittel (S1) verlässt, charakteristisch ist, ein zweites Steuersignal (C2), das für die Temperatur (Tac1) der Verbrennungsluft (AC), die das erste Wärmetauschermittel (S1) verlässt, charakteristisch ist, und ein drittes Steuersignal (C3), das für die Temperatur (Taf3) des Zufuhrfluides (FA), das das zweite Wärmetauschermittel (S2) verlässt, charakteristisch ist, zu empfangen, wobei die Steuereinheit (UC) ein erstes Steuersignal (R1) an das weitere Regulierungsmittel (Rfa) des Durchflusses von Fluid (FA) als eine Funktion des ersten (C1) und zweiten Steuersignals (C2) sendet und ein zweites Steuersignal (R2) an das Regulierungsmittel (Pfc) des Durchflusses der Abgase (Fu) als eine Funktion des dritten Steuersignals (C3) sendet.

9. Vorrichtung (100) nach einem der Ansprüche 6 bis 8, wobei die Vorrichtung (100) einen Mischer (M) umfasst, um den ersten Bruchteil (Qa) des Durchflusses (Q) von Fluid (FA), das das zweite Wärmetauschermittel (S2) verlässt, mit einem zweiten Bruchteil (Qb) von Durchfluss (Q) des Fluides (FA) zu mischen, um den Gesamtdurchfluss (Q), der in den Wärmegenerator (10) eintritt, rückzugewinnen.

10. Anlage (200) zum Erwärmen von Zufuhrfluid (FA), **dadurch gekennzeichnet, dass** sie umfasst:
- einen Wärmegenerator (10), um das Zufuhrfluid (FA) auf eine Nutztemperatur durch Verbrennung zu erwärmen;
- eine Vorrichtung nach einem der Ansprüche 6 bis 9, um die Effizienz des Wärmegenerators (10) zu verbessern.

## Revendications

1. Procédé pour améliorer l'efficacité d'un générateur de chaleur (10) destiné à chauffer un débit (Q) de fluide d'alimentation (FA) par combustion, ledit procédé comprenant les étapes :
- d'exécution d'un premier échange de chaleur entre au moins une première fraction (Qa) dudit débit (Q) dudit fluide d'alimentation (FA) et un débit d'air de combustion (AC) à délivrer au dit générateur (10) de manière à chauffer ledit air de combustion (AC) et de manière à refroidir ladite première fraction (Qa) de fluide d'alimentation (FA) d'une première température (Tfa1) à une deuxième température (Tfa0) ;
- d'exécution d'un deuxième échange de chaleur entre ladite première fraction (Qa) de fluide d'alimentation (FA) à ladite deuxième température (Tfa0) et un débit des gaz de combustion (Fu) produits par ledit générateur de chaleur (10) de manière à refroidir lesdits gaz de combustion (Fu) et de manière à chauffer ledit fluide d'alimentation (FA) de ladite deuxième température (Tfa0) à une troisième température (Tfa3),
**caractérisé en ce que** ledit débit de gaz de combustion (Fu) en échange thermique avec ladite première fraction (Qa) dudit fluide d'alimentation (FA) est régulé en fonction de la valeur de ladite troisième température (Tfa3).

2. Procédé selon la revendication 1, dans lequel la quantité de ladite première fraction (Qa) dudit fluide d'alimentation (FA) est régulée en fonction de la température (Tfa0) atteinte par ledit fluide d'alimentation (FA) à la suite dudit premier échange de chaleur.

3. Procédé selon la revendication 1, dans lequel la quantité de ladite première fraction (Qa) dudit fluide d'alimentation (FA) est régulée en fonction de la température (Tca1) atteinte par ledit air de combustion (AC) à la suite dudit premier échange de chaleur.

4. Procédé selon l'une quelconque des revendications 1 à 3, dans lequel ladite première fraction (Qa) de fluide d'alimentation (FA), à la suite dudit deuxième échange de chaleur, est mélangée avec une deuxième fraction (Qb) dudit fluide d'alimentation (FA) à ladite première température (TFa1).

5. Procédé selon l'une quelconque des revendications 1 à 3, dans lequel ledit premier échange de chaleur et ledit deuxième échange de chaleur sont effectués entre le débit total (Q) de fluide d'alimentation (FA) et respectivement ledit débit d'air de combustion (AC) et ledit débit de gaz de combustion (Fu).

6. Appareil (100) pour améliorer le rendement d'un générateur de chaleur par combustion (10), ledit appareil comprenant :
- des premiers moyens d'échange de chaleur (S1) prévus pour effectuer un premier échange de chaleur entre au moins une première fraction (Qa) d'un fluide d'alimentation (FA) à délivrer au dit générateur (10) et un débit d'air de combustion (AC) à délivrer au dit générateur (10) ;
- des deuxièmes moyens d'échange de chaleur (S2) prévus pour effectuer un deuxième échange de chaleur entre le fluide d'alimentation (FA) sortant desdits premiers moyens d'échange de chaleur (S1) et un débit des gaz de combustion (Fu) produits par ledit générateur de chaleur (10),
ledit appareil (100) étant **caractérisé en ce qu'**il comprend des moyens de régulation (Pfc) du débit pour réguler le débit desdits gaz de combustion (Fu) entrant dans lesdits deuxièmes moyens d'échange de chaleur (S2), lesdits moyens de régulation (PFc) servant à réguler le débit desdits gaz de combustion (Fu) en fonction de la température (TFa3) dudit fluide d'alimentation (FA) sortant desdits deuxièmes moyens d'échange de chaleur (S2).

7. Appareil (100) selon la revendication 6, dans lequel ledit appareil (100) comprend des moyens de régulation supplémentaires (Rfa) du débit de fluide (FA) qui passe à travers lesdits moyens d'échange de chaleur (S1, S2), lesdits moyens de régulation supplémentaires (Rfa) régulant ladite première fraction (Qa) en fonction de la température (Tfa0) du fluide d'alimentation (FA) sortant desdits premiers moyens d'échange de chaleur (S1) et/ou en fonction de la température (Tac1) dudit air de combustion (AC) sortant desdits premiers moyens d'échange de chaleur (S1).

8. Appareil (100) selon la revendication 7, dans lequel ledit appareil (100) comprend
- des premiers moyens de détection de température (MS1) pour détecter la température (Tfa0) dudit fluide d'alimentation (FA) sortant desdits premiers moyens d'échange de chaleur (S1) ;
- des deuxièmes moyens de détection de température (MS2) pour détecter la température (Tac1) dudit air de combustion (AC) sortant desdits premiers moyens d'échange de chaleur (S1) ;
- des troisièmes moyens de détection de température (MS3) pour détecter la température dudit fluide d'alimentation (FA) sortant desdits deuxièmes moyens d'échange de chaleur (S2) ;
- une unité de commande (UC) connectée aux dits premiers (MS1), deuxièmes (MS2) et troisièmes (MS3) moyens de détection pour recevoir, respectivement, un premier signal de commande (C1) caractéristique de la température (Tfa0) du fluide d'alimentation (FA) sortant desdits premiers moyens d'échange de chaleur (S1), un deuxième signal de commande (C2) caractéristique de la température (Tac1) de l'air de combustion (AC) sortant desdits premiers moyens d'échange de chaleur (S1) et un troisième signal de commande (C3) caractéristique de ladite température (TFa3) dudit fluide d'alimentation (FA) sortant desdits deuxièmes moyens d'échange de chaleur (S2), ladite unité de commande (UC) envoyant un premier signal de commande (R1) aux dits moyens de régulation supplémentaires (Rfa) du débit de fluide (FA), en fonction desdits premier (C1) et deuxième (C2) signaux de commande et envoyant un deuxième signal de commande (R2) aux dits moyens de régulation (Pfc) du débit desdits gaz de combustion (Fu) en fonction dudit troisième signal de commande (C3).

9. Appareil (100) selon l'une quelconque des revendications 6 à 8, dans lequel ledit appareil (100) comprend un mélangeur (M) pour mélanger ladite première fraction (Qa) de débit (Q) de fluide (FA) sortant desdits deuxièmes moyens d'échange de chaleur (S2) avec une deuxième fraction (Qb) de débit (Q) de fluide (FA) pour rétablir le débit total (Q) entrant dans ledit générateur de chaleur (10).

10. Installation (200) pour chauffer un fluide d'alimentation (FA), **caractérisée en ce qu'**elle comprend :
- un générateur de chaleur (10) pour chauffer ledit fluide d'alimentation (FA) à une température d'utilisation par combustion ;
- un appareil selon l'une quelconque des revendications 6 à 9, pour améliorer le rendement dudit générateur de chaleur (10).
